# EUROPÄISCHE PATENTANMELDUNG

(11) **EP 1 375 878 A2**
(43) Veröffentlichungstag der Anmeldung: **02.01.2004**
(21) Anmeldenummer: 03014145.1
(22) Anmeldetag: 24.06.2003
(51) Int. Cl.: F02D 41/02, F02D 41/40

(54) **Verfahren zum Betreiben einer direkteinspritzenden Brennkraftmaschine**

(30) Priorität: 27.06.2002 DE 10228661
(71) Anmelder: DaimlerChrysler AG, 70567 Stuttgart (DE); Siemens Aktiengesellschaft, 80333 München (DE)
(72) Erfinder: Günther, Josef, 71563 Affalterbach (DE); Voigtländer, Dirk, Dr., 70825 Korntal-Münchingen (DE); Weirich, Marko, Dr., 68161 Mannheim (DE); Klauk, Ulrike, 93059 Regensburg (DE)

(57) **Zusammenfassung**

Es wird ein Verfahren zum Betreiben einer direkteinspritzenden Brennkraftmaschine (1) mit einer in einer Abgasleitung (3) angeordneten katalytisch wirksamen Abgasreinigungseinrichtung (4) vorgeschlagen, bei welchem in einem Expansionstakt eine Nacheinspritzung von Kraftstoff vorgenommen wird, wenn eine Temperatur T_{A} der Abgasreinigungseinrichtung (4) einen vorgebbaren Grenzwert T_{G} unterschreitet.

Erfindungsgemäß wird die Menge des je Zeiteinheit nacheingespritzen Kraftstoffes in Abhängigkeit von der Temperatur T_{A} der Abgasreinigungseinrichtung (4) und der Änderungsgeschwindigkeit dT_{A}/dt der Temperatur der Abgasreinigungseinrichtung (4) eingestellt.

Anwendung in Kraftfahrzeugen.

## Beschreibung

Die vorliegende Erfindung betrifft ein Verfahren zum Betreiben einer direkteinspritzenden Brennkraftmaschine mit den Merkmalen des Oberbegriffs des Anspruchs 1.

Aus der US-Patentschrift US 5,207,058 ist eine Brennkraftmaschine mit einer Abgasreinigungseinrichtung bekannt. Wenn festgestellt wird, dass eine vorgebbare Grenztemperatur des Katalysators der Abgasreinigungseinrichtung unterschritten ist, wird über die Einspritzventile während des Expansionstaktes und des Ausschiebetaktes eine Nacheinspritzung von Kraftstoff vorgenommen. Der nacheingespritzte Kraftstoff vermischt sich mit dem Abgas und die entstandene Mischung wird stromauf der Abgasreinigungseinrichtung gezündet, wodurch die Temperatur des Katalysators über die Mindesttemperatur gebracht wird.

Aus der Deutschen Offenlegungsschrift DE 195 36 098 A1 sind ein System und ein Verfahren zur Steuerung einer Brennkraftmaschine mit Kraftstoffdirekteinspritzung bekannt. Der Brennkraftmaschine ist katalytisch wirksame Abgasreinigungseinrichtung zugeordnet, zur deren stabilen Aktivierung die Abgastemperatur mittels zusätzlich im Expansionstakt eingespritztem Kraftstoff und anschließender Entflammung angehoben wird. Alternativ zu dieser Maßnahme kann die Abgastemperatur durch die Verzögerung des Zündzeitpunktes angehoben werden.

Aus der Europäischen Offenlegungsschrift EP 0 826 869 A2 ist ein System zur Abgasaufheizung für eine direkteinspritzende Brennkraftmaschine bekannt. Bei diesem System wird eine Nacheinspritzung von Kraftstoffs vorgenommen, wenn die Abgasreinigungseinrichtung einer Aufheizung bedarf. Die Nacheinspritzung erfolgt während des noch andauernden Verbrennungsprozesses der Haupteinspritzung. Der Einspritzzeitpunkt der Nacheinspritzung wird dabei von einer Steuereinheit auf der Basis von Parametern gewählt, welche die Brenndauer des Kraftstoffs beeinflussen.

Aufgabe der Erfindung ist es, ein Verfahren zum Betreiben einer direkteinspritzenden Brennkraftmaschine anzugeben, mit dem sich eine verbesserte Wirksamkeit einer zugeordneten katalytisch wirksamen Abgasreinigungseinrichtung erreichen lässt.

Diese Aufgabe wird erfindungsgemäß durch ein Verfahren mit den Merkmalen des Anspruchs 1 gelöst.

Das erfindungsgemäße Verfahren zeichnet sich dadurch aus, dass die bei Unterschreiten eines vorgebbaren Grenzwerts T_{G} für die Temperatur T_{A} der Abgasreinigungseinrichtung je Zeiteinheit nacheingespritzte Kraftstoffmenge in Abhängigkeit von der Temperatur T_{A} der Abgasreinigungseinrichtung und der Änderungsgeschwindigkeit dT_{A}/dt Temperatur der Abgasreinigungseinrichtung eingestellt wird.

Werden Brennkraftmaschinen mit großen Zeitanteilen im Niederlastbereich betrieben, resultiert daraus, insbesondere bei Brennkraftmaschinen mit großem mechanischen Wirkungsgrad, ein vergleichsweise kühles Abgas. Dies hat einen geringen Wärmeeintrag in die nachgeordnete katalytische Abgasreinigungseinrichtung zur Folge, weshalb diese den Temperaturbereich der ihr zugedachten Wirksamkeit nicht erreicht oder unterschreitet. Daraus resultiert eine Fehlfunktion der Abgasreinigungseinrichtung und damit eine unzureichende Abgasreinigung.

Durch die Nacheinspritzung von Kraftstoff kann erhitztes Abgas erzeugt werden, wodurch entweder verhindert wird, dass die Temperatur der Abgasreinigungseinrichtung unter den Temperaturbereich ihrer Wirksamkeit absinkt oder erreicht wird, dass die Abgasreinigungseinrichtung rasch wieder in diesen Temperaturbereich gelangt. Durch die Nacheinspritzung kann jedoch das Abgas auch mit unvollständig verbrannten Kraftstoffbestandteilen angereichert werden. Durch eine exotherme Oxidation dieser meist in Form von Kohlenwasserstoff vorliegenden Kraftstoffbestandteile in der katalytischen Abgasreinigungseinrichtung kann diese dann ebenfalls aufgeheizt werden und dadurch das Absinken unter den Temperaturbereich der Wirksamkeit verhindert werden.

Unter einer Nacheinspritzung wird hier im Folgenden die Einspritzung von Kraftstoff in den Expansionstakt, d.h. die Einspritzung einer zusätzlichen Kraftstoffmenge nach der zur Erzeugung der mechanischen Leistung der Brennkraftmaschine vorgenommenen Haupteinspritzung, verstanden.

Dadurch, dass erfindungsgemäß die Menge des je Zeiteinheit nacheingespritzten Kraftstoffs sowohl in Abhängigkeit von der Temperatur T_{A} der Abgasreinigungseinrichtung als auch in Abhängigkeit von der Änderungsgeschwindigkeit dT_{A}/dt der Temperatur der Abgasreinigungseinrichtung eingestellt wird, kann eine besonders große Effektivität und Effizienz der Nacheinspritzung erreicht werden. Dabei wird durch die Berücksichtigung der Änderungsgeschwindigkeit dT_{A}/dt der Temperatur der Abgasreinigungseinrichtung eine vorausschauende Wirkung erzielt und beispielsweise eine betriebsbedingt sonst rasch ablaufende Abkühlung der Abgasreinigungseinrichtung vermieden. D.h., dass die Dynamik der betriebsbedingten Temperaturänderungen berücksichtigt werden kann, wodurch eine Fehlfunktion der Abgasreinigungseinrichtung vermieden werden kann, und eine verbesserte Abgasreinigung erzielt wird.

In Ausgestaltung des Verfahrens wird der Einspritzzeitpunkt der Nacheinspritzung in Abhängigkeit von der Temperatur T_{A} der Abgasreinigungseinrichtung und/oder in Abhängigkeit von der Drehzahl der Brennkraftmaschine eingestellt. Durch diese Maßnahme kann entweder eine drehmomentneutrale, zumindest teilweise Verbrennung des nacheingespritzten Kraftstoffs und damit eine Erhitzung des Abgases erreicht werden. Dadurch kann die Abgasreinigungseinrichtung auch dann aufgeheizt werden, wenn diese den Temperaturbereich ihrer katalytischen Wirksamkeit unterschritten hat. Oder es können unverbrannte Kraftstoffanteile in das Abgas eingebracht werden, welche in der katalytischen Abgasreinigungseinrichtung unter Freisetzung von Wärmeenergie oxidiert werden. Dadurch kann die Temperatur der Abgasreinigungseinrichtung angehoben werden, wenn diese zwar abgekühlt ist, den Temperaturbereich ihrer katalytischen Wirksamkeit jedoch noch nicht unterschritten hat. Durch Berücksichtigung der Drehzahl der Brennkraftmaschine hinsichtlich des Einspritzzeitpunkts kann der Tatsache Rechnung getragen werden, dass die Verweilzeit des nacheingespritzten Kraftstoffes im Brennraum der Brennkraftmaschine je nach Drehzahl unterschiedlich ist. Somit kann die im Brennraum der Brennkraftmaschine stattfindende Aufbereitung des nacheingespritzten Kraftstoffes an die Temperatur der Abgasreinigungseinrichtung angepasst werden.

In weiterer Ausgestaltung des Verfahrens wird die Nacheinspritzung in jedem n-ten Expansionstakt vorgenommen, wobei n eine ganze Zahl größer oder gleich eins ist. Dies hat den Vorteil, dass sich eine sehr genaue Dosierung der nacheingespritzten Kraftstoffmenge erreichen lässt. Beispielsweise kann die je Nacheinspritzvorgang einspritzbare Kraftstoffmindestmenge nur in jedem zweiten Expansionstakt eingespritzt werden. Dadurch resultiert bezogen auf jeden einzelnen Expansionstakt eine Einspritzmenge, welche halb so groß ist wie die Mindesteinspritzmenge je Einspritzvorgang, also eine verfeinerte Dosierung des nacheingespritzten Kraftstoffs.

In weiterer Ausgestaltung des Verfahrens wird die Zahl n in Abhängigkeit von der Temperatur T_{A} der Abgasreinigungseinrichtung und der Änderungsgeschwindigkeit dT_{A}/dt der Temperatur der Abgasreinigungseinrichtung gewählt. Durch diese Maßnahme lässt sich die von der Temperatur der Abgasreinigungseinrichtung und deren Änderungsgeschwindigkeit bestimmte einzubringende Energiemenge besonders genau einstellen.

In weiterer Ausgestaltung des Verfahrens wird der Einspritzdruck des nacheingespritzten Kraftstoffes in Abhängigkeit vom Einspritzzeitpunkt der Nacheinspritzung eingestellt. Dadurch kann eine an den Einspritzzeitpunkt angepasste Aufbereitung des nacheingespritzten Kraftstoffs erreicht werden. Beispielsweise kann es vermieden werden, dass bei zu hohem Einspritzdruck und frühem Nacheinspritzzeitpunkt der Einspritzstrahl auf den Kolbenboden trifft und dort eine unerwünschte Kondensation des Kraftstoffes eintritt.

In weiterer Ausgestaltung des Verfahrens wird die Öffnungszeit eines Auslassventils der Brennkraftmaschine in Abhängigkeit von der Temperatur T_{A} der Abgasreinigungseinrichtung und der Änderungsgeschwindigkeit dT_{A}/dt der Temperatur der Abgasreinigungseinrichtung eingestellt. Da die Einstellung des Öffnungszeitpunktes des Auslassventils in Bezug auf die Kolbenposition zu sehen ist, wird dadurch ebenfalls die Verweildauer des nacheingespritzten Kraftstoffs in Relation zur Dauer des gesamten Expansionstaktes beeinflusst. Durch Berücksichtigung der Temperatur T_{A} der Abgasreinigungseinrichtung und der Änderungsgeschwindigkeit dT_{A}/dt der Temperatur der Abgasreinigungseinrichtung kann die Nacheinspritzung noch besser auf die aktuelle Wirksamkeit der Abgasreinigungseinrichtung und deren Entwicklung abgestimmt werden.

In weiterer Ausgestaltung des Verfahrens wird die Öffnungszeit des Auslassventils in Abhängigkeit von der Drehzahl der Brennkraftmaschine eingestellt. Durch diese Maßnahme kann die Verweilzeit des nacheingespritzten Kraftstoffes im Brennraum der Brennkraftmaschine auf die Drehzahl abgestimmt werden und insbesondere zusammen mit der Berücksichtigung der Temperatur der Abgasreinigungseinrichtung bzw. deren Änderungsgeschwindigkeit eine geeignete Aufbereitung des nacheingespritzten Kraftstoffs erreicht werden.

In weiterer Ausgestaltung des Verfahrens wird der Grenzwert T_{G} der Temperatur der Abgasreinigungseinrichtung, unterhalb der eine Nacheinspritzung von Kraftstoff vorgenommen wird, in Abhängigkeit vom Betriebszustand der Brennkraftmaschine und/oder von der Abgaszusammensetzung und/oder vom Alterungszustand der Abgasreinigungseinrichtung eingestellt. Durch diese Maßnahme wird der Tatsache Rechnung getragen, dass die Wirkung einer Nacheinspritzung je nach Betriebszustand der Brennkraftmaschine bzw. je nach Abgaszusammensetzung unterschiedlich sein kann. Ein durch Alterung verändertes Ansprechen der Abgasreinigungseinrichtung auf die Nacheinspritzung kann ebenfalls ausgeglichen werden.

Im Folgenden wird die Erfindung anhand von Zeichnungen und zugehörigen Beispielen näher erläutert. Dabei zeigen:
- Fig. 1: ein schematisches Blockbild einer Brennkraftmaschine mit zugehöriger katalytischer Abgasreinigungseinrichtung,
- Fig. 2: ein Diagramm mit der schematisch skizzierten Abhängigkeit der nacheinzuspritzenden Kraftstoffmenge m_{K} von der Änderungsgeschwindigkeit dT_{A}/dt der Temperatur der Abgasreinigungseinrichtung und der Temperatur T_{A} der Abgasreinigungseinrichtung,
- Fig. 3: ein Diagramm mit der schematisch skizzierten Abhängigkeit der durch eine Nacheinspritzung ins Abgas eingebrachten zusätzlichen Kohlenwasserstoffmenge Δm_{HC} sowie der damit bewirkten Temperaturänderungen ΔT vor und nach einem Katalysator vom Einspritzzeitpunkt t_{E},
- Fig. 4: ein Diagramm mit der schematisch skizzierten Abhängigkeit des Nacheinspritzzeitpunktes t_{E} von der Katalysatortemperatur T_{A},
- Fig. 5: ein Diagramm mit der schematisch skizzierten Abhängigkeit des Nacheinspritzzeitpunktes t_{E} von der Brennkraftmaschinendrehzahl N,
- Fig. 6: ein Diagramm mit der schematisch skizzierten Abhängigkeit des Bruchteils der Expansionstakte ohne Nacheinspritzung von der Änderungsgeschwindigkeit dT_{A}/dt Temperatur der Abgasreinigungseinrichtung und der Temperatur T_{A} der Abgasreinigungseinrichtung,
- Fig. 7: ein Diagramm mit der schematisch skizzierten Abhängigkeit des Nacheinspritzdrucks p_{E} vom Nacheinspritzzeitpunktes t_{E},
- Fig. 8: ein Diagramm mit der schematisch skizzierten Abhängigkeit des Öffnungszeitpunkts tᵥ eines Auslassventils der Brennkraftmaschine von der Temperatur T_{A} der Abgasreinigungseinrichtung.

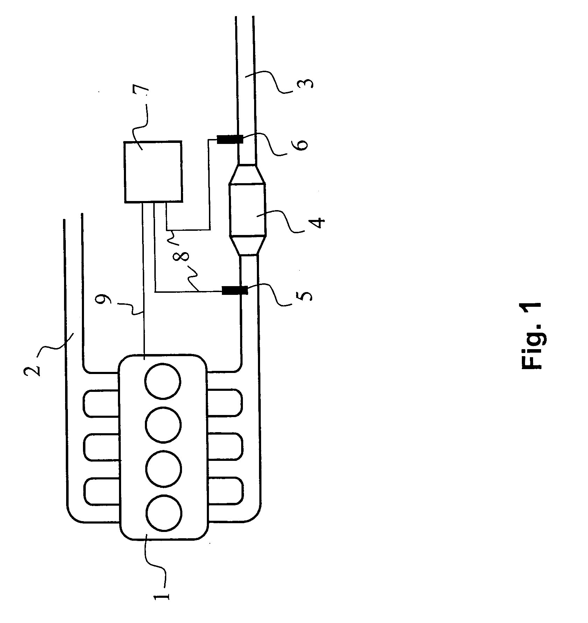

Gemäß Fig. 1 wird einer hier beispielhaft vierzylindrig ausgeführten Brennkraftmaschine 1 Verbrennungsluft über eine Ansaugluftleitung 2 zugeführt. Das im Verbrennungsprozess erzeugte Abgas wird über eine Abgasleitung 3 einer Abgasreinigungseinrichtung zugeführt. Die Brennkraftmaschine 1 ist beispielhaft als magerbetriebsfähiger Ottomotor mit Direkteinspritzung ausgeführt. Die Abgasreinigungseinrichtung ist als motornah angeordneter Oxidationskatalysator 4 ausgeführt. Dem Motor 1 ist eine elektronische Steuer-/Regeleinrichtung 7 zugeordnet, welche den gesamten Motorbetrieb steuert bzw. regelt. Die Steuer-/Regeleinrichtung 7 verfügt über die üblichen Möglichkeiten moderner Motorsteuergeräte und weist hierfür insbesondere eine Recheneinheit, eine Speichereinheit und Ein-/Ausgabeeinheiten auf. Zur Realisierung der Steuer-/Regelfunktionen erhält die Steuer-/Regeleinrichtung 7 eine Vielzahl von Signalen über entsprechende Signalleitungen. Von diesen sind in der Fig. 1 nur die Signalleitungen 8 eingezeichnet, mit welchen die Messwerte der vor bzw. hinter dem Katalysator 4 in der Abgasleitung angeordneten Temperaturfühler 5, 6 der Steuer-/Regeleinrichtung 7 zugeführt werden. Zur Steuerung des Motorbetriebs und insbesondere der Kraftstoffeinspritzung dient eine hier stellvertretend eingezeichnete Steuerleitung 9.

Weitere zum Betrieb der Brennkraftmaschine 1 und der gesamten Abgasreinigungsanlage eingesetzte Bauteile wie Kraftstoffzufuhrleitungen, Lambdasonden in der Abgasleitung und dergl. sind aus Gründen der Übersichtlichkeit nicht in die Fig. 1 mit aufgenommen. In der Abgasleitung 3 können natürlich zusätzlich zum Oxidationskatalysator 4 hier ebenfalls nicht dargestellte weitere Komponenten zur Abgasreinigung angeordnet sein.

Für das hier zur Diskussion stehende erfindungsgemäße Verfahren wertet die Steuer-/Regeleinrichtung 7 die vor und nach dem Katalysator 4 gemessenen Temperaturen dahingehend aus, dass ein für die Wirksamkeit des Katalysators maßgebender Temperaturwert, im Folgenden als Katalysatortemperatur T_{A} bezeichnet, ermittelt wird. Dies kann beispielsweise über ein eingespeichertes Rechenmodell oder kennfeldbasiert geschehen. Selbstverständlich ist es auch möglich, die Katalysatortemperatur T_{A} durch einen direkt im Katalysator 4 eingebrachten Temperaturfühler oder aus einem entsprechenden Modell aus den Motorbetriebsparametern zu ermitteln. Die Steuer-/Regeleinrichtung 7 ermittelt ferner, vorzugsweise laufend, die aktuelle Änderungsgeschwindigkeit dT_{A}/dt der Katalysatortemperatur. Somit ist die Steuer-/Regeleinrichtung 7 in der Lage, die Entwicklung der Katalysatortemperatur und deren Änderungsgeschwindigkeit zu ermitteln. Um die Genauigkeit und Zuverlässigkeit der Rechenergebnisse zu verbessern, kann dabei zusätzlich eine Signalkonditionierung, beispielsweise durch Tiefpassfilterung, vorgenommen werden.

Wird von der Steuer-/Regeleinrichtung 7 erkannt, dass die Katalysatortemperatur T_{A} einen vorgebbaren Grenzwert T_{G} unterschreitet, wird dies dahingehend interpretiert, dass die Funktion des Katalysators vermindert ist, oder sich zu vermindern droht. Daraufhin wird eine Nacheinspritzung von Kraftstoff von der Steuer-/Regel-einrichtung 7 veranlasst. Die genaue Art und Weise der Durchführung der Nacheinspritzung wird von der Steuer-/Regeleinrichtung 7 unter Berücksichtigung einer Vielzahl von Abhängigkeiten festgelegt. Dadurch kann die Nacheinspritzung bedarfsgerecht erfolgen und auch unter schwierigen Motorbetriebsbedingungen eine gute Katalysatorwirksamkeit erreicht werden. Im Folgenden werden die angesprochenen Abhängigkeiten näher erläutert.

Erfindungsgemäß wird die Menge des je Zeiteinheit nacheingespritzten Kraftstoffs von der aktuellen Katalysatortemperatur T_{A} und der aktuellen Änderungsgeschwindigkeit dT_{A}/dt der Katalysatortemperatur bestimmt.

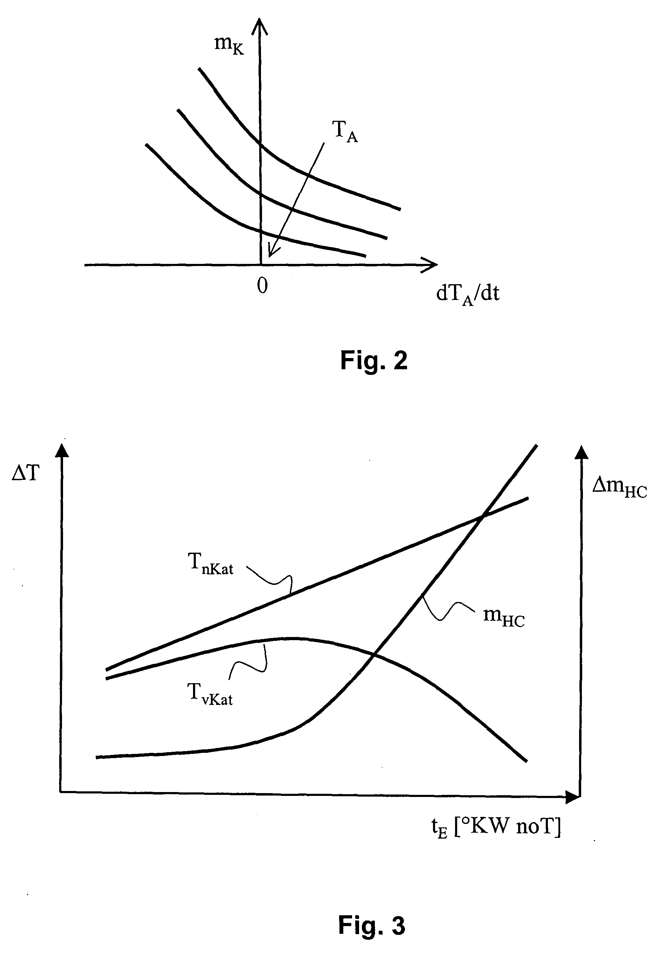

Fig. 2 zeigt ein Diagramm mit der schematisch skizzierten Abhängigkeit der nacheinzuspritzenden Kraftstoffmenge m_{K} von der Änderungsgeschwindigkeit dT_{A}/dt Temperatur des Katalysators 4 und der Temperatur T_{A} des Katalysators 4. Der typischerweise abgedeckte Wertebereich für die nacheinzuspritzende Kraftstoffmenge m_{K} liegt etwa zwischen 10 % und 100 % der Haupteinspritzmenge. Der typischerweise berücksichtigte Wertebereich für die Änderungsgeschwindigkeit dT_{A}/dt Temperatur des Katalysators 4 liegt etwa zwischen -25 K/s und +25 K/s. Ein vergleichsweise großer negativer Wert von dT_{A}/dt zeigt an, dass eine relativ rasche Auskühlung des Katalysators 4 stattfindet. Entsprechend der im Diagramm eingezeichneten Kurvenverläufe wird daher eine vergleichsweise große Menge m_{K} Kraftstoff je Zeiteinheit nacheingespritzt. Nimmt dagegen dT_{A}/dt einen positiven Wert an, so bedeutet dies, dass die Temperatur des Katalysators 4 wieder ansteigt, weshalb nur eine geringere Nacheinspritzmenge m_{K} erforderlich ist, um die Temperatur des Katalysators 4 wieder über T_{G} anzuheben und den Katalysator somit wieder in den Temperaturbereich einer guten Wirksamkeit zu bringen. Die im Diagramm der Fig. 2 eingezeichneten Kurven sind der Katalysatortemperatur T_{A} als Parameter zugeordnet. Demnach erfordert eine vergleichsweise große Temperatur T_{A} (mit T_{A} < T_{G}) eine geringere Nacheinspritzmenge als eine vergleichsweise niedrige Temperatur T_{A}. Entsprechend ist im Diagramm der Fig. 2 eine der höheren Temperatur T_{A} zugeordnete Kurve unterhalb der einer niedrigeren Temperatur T_{A} zugeordneten Kurve angeordnet. Durch die erfindungsgemäße Berücksichtigung sowohl der Katalysatortemperatur T_{A}, als auch deren Änderungsgeschwindigkeit dT_{A}/dt kann daher in optimaler Weise auf den Zustand des Katalysators und zusätzlich vorausschauend auf dessen Entwicklung reagiert werden. Die im Diagramm der Fig. 2 eingezeichneten Abhängigkeiten können sich jedoch je nach Anwendungsfall unterschiedlich darstellen und besitzen deshalb hier nur beispielhaften Charakter.

Erfindungsgemäß wird der Zeitpunkt des Nacheinspritzbeginns in Abhängigkeit von der Temperatur des Katalysators 4 eingestellt. Dadurch wird der Tatsache Rechnung getragen, dass der Nacheinspritzzeitpunkt Einfluss auf die Aufbereitung des nacheingespritzten Kraftstoffs und somit auf die damit direkt erzielbare Wirkung besitzt. Generell wird die Nacheinspritzung im Expansionstakt des Motors vorgenommen. Entsprechend kann der Beginn der Nacheinspritzung, im Folgenden vereinfacht als Nacheinspritzzeitpunkt bezeichnet, in °KWnoT (Grad Kurbelwinkel nach dem oberen Totpunkt des Kolbens) angegeben werden.

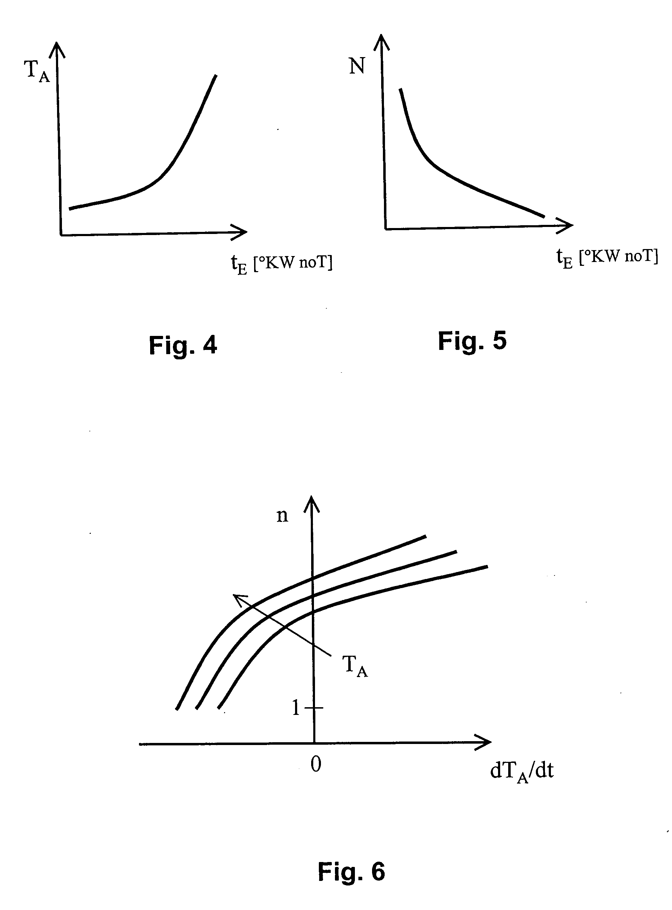

Das Diagramm der Fig. 3 verdeutlicht die mit unterschiedlichen Nacheinspritzzeitpunkten erzielbare Wirkung. Aufgetragen ist die Zunahme Δm_{HC} des Kohlenwasserstoffgehalts m_{HC} im Abgas sowie die Zunahme ΔT der Temperatur T_{vKat} bzw. T_{nKat} vor bzw. nach dem Katalysator 4 in Abhängigkeit vom Nacheinspritzzeitpunkt t_{E} in einem Bereich zwischen etwa 20° KWnoT bis etwa 100° KWnoT bei einem mageren Betrieb des Motors 1 mit einer Drehzahl von 2000 1/min. Die nacheingespritzte Kraftstoffmenge beträgt etwa 12 mg je Nacheinspritzvorgang. Die Temperatur des Katalysators 4 liegt im gezeigten Beispiel etwas über dessen Anspringtemperatur. Wie dem Verlauf der Kurve m_{Hc} entnommen werden kann, wird bei einer frühen Nacheinspritzung kaum zusätzlicher Kohlenwasserstoff bzw. unverbrannte Kraftstoffanteile ins Abgas eingebracht. Es wird jedoch eine deutliche Anhebung der Abgastemperatur und damit der Temperaturen ΔT vor Katalysator (T_{vKat}) und nach Katalysator (T_{nKat}) erreicht. Mit zunehmend späterem Nacheinspritzbeginn erfolgt allerdings ein zunehmender Eintrag von Kohlenwasserstoffen ins Abgas. Entsprechend nimmt die erreichte Abgastemperaturerhöhung vor Katalysator ab, weshalb die Kurve T_{vKat} nach Durchschreiten eines Maximums absinkt. Die Temperatur des Katalysators selbst steigt jedoch auch in diesem Fall an, was sich in einem weiteren Anstieg der Kurve T_{nKat} ausdrückt. Ursache für dieses Verhalten ist das Freiwerden von Reaktionswärme in Folge einer exothermen Oxidation der in zunehmendem Maße ins Abgas eingebrachten Kohlenwasserstoffe. Durch eine geeignete Wahl des Einspritzzeitpunktes in Abhängigkeit von der Temperatur T_{A} des Katalysators 4 kann somit zuverlässig dessen Temperatur angehoben werden. Das Diagramm der Fig. 4 zeigt schematisch diese Abhängigkeit.

Entsprechend des skizzierten Kurvenverlaufs wird bei niedrigen Katalysatortemperaturen bevorzugt ein früher Nacheinspritzbeginn eingestellt. Dadurch kann die Katalysatortemperatur über die Wärmeübertragung vom erhitzten Abgas auch dann erhöht werden, wenn die Anspringtemperatur des Katalysators bereits unterschritten ist, d.h. die Grenztemperatur T_{G} vergleichsweise stark unterschritten ist. Der Katalysator ist in diesem Fall nicht oder nur schwach aktiv, weshalb Kohlenwasserstoffe nicht mehr oxidiert werden können und deshalb die Exothermie der katalytischen Oxidation nicht zur Anhebung der Katalysatortemperatur ausgenutzt werden kann. Dagegen wird bevorzugt ein später Nacheinspritzbeginn eingestellt, wenn die Grenztemperatur T_{G} vergleichsweise wenig unterschritten ist, d.h. bei vergleichsweise noch hohen Katalysatortemperaturen T_{A}. In diesem Fall ist der Katalysator 4 in der Lage, die durch Nacheinspritzung ins Abgas eingebrachten Kohlenwasserstoffe zu oxidieren. Als Folge hiervon wird der Katalysator 4 ebenfalls aufgeheizt. Durch eine vorteilhafterweise an den Katalysator und an den Motor und dessen Betriebspunkt angepasste Abhängigkeit, welche die Steuer-/Regeleinrichtung 7 ermittelt oder die ihr zur Verfügung steht, kann je nach Katalysatortemperatur der Einspritzzeitpunkt mit optimaler Wirkung eingestellt werden.

Die im Brennraum des Motors 1 ablaufende Veränderung des nacheingespritzten Kraftstoffes ist von der Motordrehzahl abhängig. Ursache hierfür ist die Tatsache, dass für einen bestimmten Einspritzzeitpunkt bei hohen Drehzahlen weniger Zeit für eine Verbrennung des nacheingespritzten Kraftstoffs im Brennraum zur Verfügung steht, als bei niedrigen Drehzahlen. Folglich werden bei hohen Drehzahlen tendenziell mehr unverbrannte Kohlenwasserstoffe freigesetzt, als bei niedrigen Drehzahlen. Erfindungsgemäß wird dies bei der Einstellung des Nacheinspritzzeitpunktes dadurch berücksichtigt, dass der Nacheinspritzzeitpunkt auch in Abhängigkeit von der Drehzahl des Motors 1 eingestellt werden kann. Das Diagramm der Fig. 5 zeigt schematisch diese Abhängigkeit.

Entsprechend des skizzierten Kurvenverlaufs wird insbesondere bei stärkerer Unterschreitung des Temperaturgrenzwertes T_{G} bei hohen Drehzahlen bevorzugt ein früher Nacheinspritzbeginn eingestellt. Somit steht auch bei hohen Drehzahlen des Motors 1 noch genügend Zeit zur Verfügung, um den in den Brennraum des Motors 1 nacheingespritzten Kraftstoff vor Öffnen des Auslassventils an der Verbrennung teilhaben zu lassen. Folglich kann auch unter diesen Bedingungen das Abgas direkt erhitzt werden, und der Katalysator 4 mittels des erhitzten Abgases aufgeheizt werden.

Wird der Temperaturgrenzwertes T_{G} nur wenig unterschritten, ist es insbesondere bei geringen Änderungsgeschwindigkeiten dT_{A}/dt der Katalysatortemperatur vorteilhaft, nur geringe Energiemengen zur Aufheizung des Katalysators 4 zur Verfügung zu stellen. In diesen Fällen kann die Nacheinspritzung der technisch realisierbaren Mindestnacheinspritzmenge in jedem Expansionstakt bereits zu einem unnötig starken Temperaturanstieg des Katalysators 4 führen. Erfindungsgemäß wird in insbesondere in diesen Fällen die je Zeit einzuspritzende Kraftstoffmenge so aufgeteilt, dass nur in jedem n-ten Expansionstakt nacheingespritzt wird. Je geringer die je Zeiteinheit nacheinzuspritzende Kraftstoffmenge ist, desto mehr Expansionstakte werden ohne Nacheinspritzung durchgeführt, d.h. desto größer wird die Zahl n eingestellt. Dadurch wird eine besonders genaue und feine Zumessung der nacheingespritzten Kraftstoffmenge möglich, und die Temperatur des Katalysators 4 kann mit großer Empfindlichkeit angehoben und beeinflusst werden. Die je Zeiteinheit insgesamt nacheingespritzte Kraftstoffmenge kann noch feiner eingestellt werden, wenn die Nacheinspritzung nur in einem Teil der Zylinder erfolgt oder zeitliche versetzt sequentiell auf einzelne Zylinder der Brennkraftmaschine aufgeteilt wird.

Im Diagramm der Fig. 6 ist die eingestellte Zahl n in Abhängigkeit von der Änderungsgeschwindigkeit dT_{A}/dt Temperatur der Abgasreinigungseinrichtung aufgetragen. Die Zahl n gibt hierbei an, dass nur in jedem n-ten Expansionstakt eine Nacheinspritzung vorgenommen wird. Nimmt n den Wert eins an, so bedeutet dies, dass die Nacheinspritzung in jedem Expansionstakt vorgenommen wird. Entsprechend bedeutet n = 4, dass die Nacheinspritzung in jedem 4-ten Expansionstakt vorgenommen wird. Daher wird bei einem vergleichsweise stark negativen Wert für dT_{A}/dt (rasch fallende Katalysatortemperatur) häufiger eingespritzt, als bei positivem Wert für dT_{A}/dt (steigende Katalysatortemperatur). Entsprechend zeigen die Kurven im Diagramm der Fig. 6 eine stetig ansteigende Form. Als Parameter dient hier, analog zum Diagramm der Fig. 2, die Katalysatortemperatur T_{A}. Der Wertebereich für dT_{A}/dt entspricht ebenfalls dem des Diagramms der Fig. 2. Durch die Anwendung der schematisch gezeigten Abhängigkeit kann in vorteilhafter Weise die nacheinzuspritzende Kraftstoffmenge besonders fein eingestellt werden, und somit besonders empfindlich auf die gewünschte Erhöhung der Katalysatortemperatur hingewirkt werden.

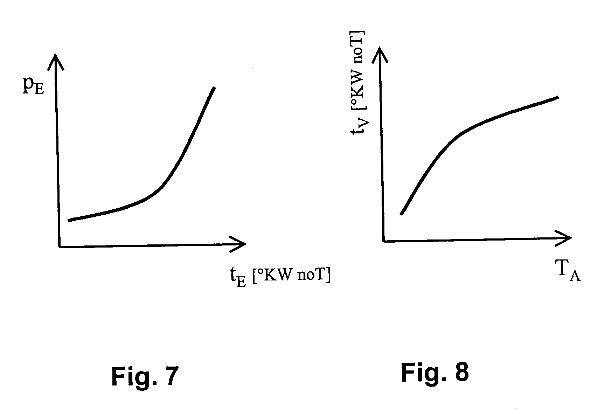

Fig. 7 zeigt ein Diagramm mit der schematisch skizzierten Abhängigkeit des Nacheinspritzdrucks p_{E} vom Nacheinspritzzeitpunkt t_{E}. Erfindungsgemäß kann der Druck des Kraftstoffs bei der Nacheinspritzung entsprechend der schematisch gezeigten Abhängigkeit eingestellt werden. Dadurch wird erreicht, dass die Eindringtiefe des Nacheinspritzstrahls in einen Brennraum des Motors 1 dem Nacheinspritzzeitpunkt angepasst werden kann. Es kann dadurch vermieden werden, dass beispielsweise bei frühem Einspritzzeitpunkt der Einspritzstrahl der Nacheinspritzung auf den Kolbenboden auftrifft und somit eine unerwünschte Kondensation des nacheingespritzten Kraftstoffs auftritt. Es wird deshalb in diesem Fall der Einspritzdruck vermindert. Umgekehrt kann bei einem späten Nacheinspritzzeitpunkt der Einspritzdruck erhöht werden und zur Aufbereitung des nacheingespritzten Kraftstoffes somit ein größeres Brennraumvolumen ausgenutzt werden. Entsprechend zeigt der im Diagramm der Fig. 7 angegebene Kurvenverlauf eine ansteigende Form.

Das Diagramm der Fig. 8 zeigt eine weitere Abhängigkeit, welche die Steuer-/Regeleinrichtung 7 ermittelt oder die ihr zur Verfügung steht. Diese Funktion erlaubt der Steuer-/Regeleinrichtung 7 die Öffnungszeit tᵥ des Auslassventils in Abhängigkeit von der Katalysatortemperatur T_{A} einzustellen. Hierzu steuert die Steuer-/Regeleinrichtung 7 beispielsweise eine Vorrichtung zum Verstellen der Nockenwelle entsprechend der schematisch gezeigten Abhängigkeit an. Durch eine Veränderung des Öffnungszeitpunktes der Auslassventile kann ebenfalls Einfluss auf die Verweildauer des nacheingespritzten Kraftstoffes im Brennraum genommen werden, und somit dessen Aufbereitung gezielt beeinflusst werden. Insbesondere im Zusammenhang mit dem Nacheinspritzzeitpunkt kann mit dieser Maßnahme sehr gezielt entweder mehr in Richtung einer direkten Aufheizung des Abgases oder in Richtung auf eine Anreicherung des Abgases mit Kohlenwasserstoffen hingewirkt werden. Dabei können insbesondere der Betriebszustand des Motors 1 und die geforderte Leistungsabgabe mitberücksichtigt werden. Die im einzelnen hierzu herangezogenen Abhängigkeiten können von der Ausführung des Motors 1 abhängen, weshalb auf die Darstellung der Abhängigkeiten im Einzelnen verzichtet wird. Diese werden von Fall zu Fall ermittelt und beispielsweise im Speicher der Steuer-/Regeleinrichtung 7 abgelegt. Vorzugsweise werden die Auslassventilöffnungszeiten tᵥ bei hohen Temperaturen T_{A} des Katalysators 4 vergleichsweise spät eingestellt, bei vergleichsweise niedrigen Temperaturen T_{A} des Katalysators 4 vergleichsweise früh eingestellt. Dadurch wird die Menge des in das Abgas eingebrachten unverbrannten Kohlenwasserstoffs an die Katalysatortemperatur angepasst. Erfindungsgemäß kann auch hier die Änderungsgeschwindigkeit dT_{A}/dt regelungstechnisch oder steuerungstechnisch mit berücksichtigt werden. Ebenfalls mitberücksichtigt wird die Abhängigkeit des Öffnungszeitpunkts des Auslassventils von der Drehzahl der Brennkraftmaschine, um die zu beachtenden Einflüsse auf den Motorbetrieb einzubeziehen.

Der Grenzwert T_{G} für die Temperatur des Katalysators 4, bei dessen Unterschreitung eine Nacheinspritzung von Kraftstoff vorgenommen wird, wird zweckmäßigerweise so vorgegeben, dass er im Bereich der Anspringtemperatur des Katalysators 4 liegt. Er ist deshalb vom Typ des Katalysators abhängig und beträgt typischerweise 250° C bis 350° C. Da sich die Anspringtemperatur des Katalysators auf Grund von Alterungsvorgängen im Laufe der Zeit ändern kann, wird erfindungsgemäß der Grenzwert T_{G} bei einer Alterung des Katalysators 4 entsprechend angepasst. Zu diesem Zweck wird der Alterungszustand des Katalysators laufend oder von Zeit zu Zeit bewertet. Dies kann beispielsweise über die mitgezählte Lebensdauer des Katalysators geschehen, wobei besondere Belastungssituationen zusätzlich gewertet werden können. Es können zu diesem Zweck jedoch auch spezielle Testzyklen in der Steuer-/Regeleinrichtung 7 hinterlegt sein, deren Ergebnis hinsichtlich des Alterungszustands des Katalysators ausgewertet wird. Wird eine Alterung festgestellt, so wird der Grenzwert T_{G} entsprechend erhöht, da eine Alterung im Allgemeinen auch eine Erhöhung der Anspringtemperatur zur Folge hat. Deshalb nimmt der Katalysatoraktivität bei sinkender Temperatur bereits zu einem früheren Zeitpunkt ab, was durch die Korrektur des Grenzwerts T_{G} ausgeglichen wird. Auf diese Weise wird kann auch ein gealterter Katalysator aktiv gehalten werden, auch wenn temperaturmäßig ungünstige Bedingungen vorliegen, wodurch auch über die gesamte Lebensdauer des Katalysators eine verbesserte Abgasreinigung erreicht wird. Zusätzlich wird der Grenzwert T_{G} in Abhängigkeit von den Motorbetriebsbedingungen und von der davon abhängigen Zusammensetzung des unbehandelten Abgases vorgegeben. Dadurch kann beispielsweise erreicht werden, dass ein Übergang von einem sehr mageren Schichtladebetrieb in den homogenen mageren Betrieb oder in den stöchiometrischen Betrieb hinsichtlich des Einflusses auf die Katalysatorwirksamkeit berücksichtigt wird.

Der Einfluss des Motorbetriebszustands bzw. der daraus resultierenden Abgaszusammensetzung kann auch bei der Festlegung des Einspritzzeitpunkts oder bei der Festlegung der Auslassventilöffnungszeit berücksichtigt werden. So kann beispielsweise eine eventuell andernfalls erfolgende Überanreicherung des Abgases an Kohlenwasserstoffen vermieden werden, wenn diese auf Grund des Motorbetriebszustands bzw. der daraus resultierenden Abgaszusammensetzung nicht mehr oxidiert werden können. So wäre beispielsweise die Anreicherung des Abgases mit Kohlenwasserstoffen zum Zwecke der Katalysatoraufheizung bei einem Wechsel des Motorbetriebs vom Magerbetrieb in den stöchiometrischen Betrieb nutzlos, da bei stöchiometrischem Motorbetrieb nicht genügend Sauerstoff im Abgas enthalten sein kann, um eine vollständige Oxidation der Kohlenwasserstoffe zu ermöglichen.

Es versteht sich, dass die in den einzelnen Diagrammen gezeigten Abhängigkeiten nur beispielhaften Charakter haben und sich je nach Anwendungsfall andersartig darstellen können. Es versteht sich ferner, dass die dargestellten Abhängigkeiten bei der Führung des erfindungsgemäßen Verfahrens einzeln oder in Kombination berücksichtigt werden können.

Es versteht sich weiter, dass das oben beispielhaft geschilderte Verfahren sinngemäß auch bei der Aufheizung anderer katalytischer Abgasreinigungseinrichtungen, wie beispielsweise bei einem katalytisch beschichteten Partikelfilter angewendet werden kann. Ein Anwendungsfall bei welchem das erfindungsgemäße Verfahren mit besonderem Vorteil angewendet werden kann, ist beispielsweise der Aufheizvorgang eines solchen Partikelfilters im Zusammenhang mit seiner Regeneration. Weiter kann das oben geschilderte Verfahren auch bei einem NOₓ-Speicherkatalysator angewendet werden, wenn dieser beispielsweise zu Regenerationszwecken aufgeheizt oder ganz allgemein in den Temperaturbereich seiner normalen Wirkung gebracht werden soll.

## Patentansprüche

1. Verfahren zum Betreiben einer direkteinspritzenden Brennkraftmaschine (1) mit einer in einer Abgasleitung (3) angeordneten katalytisch wirksamen Abgasreinigungseinrichtung (4), bei welchem in einem Expansionstakt eine Nacheinspritzung von Kraftstoff vorgenommen wird, wenn eine Temperatur T_{A} der Abgasreinigungseinrichtung (4) einen vorgebbaren Grenzwert T_{G} unterschreitet,
**dadurch gekennzeichnet, dass**
die Menge mₖ des je Zeiteinheit nacheingespritzen Kraftstoffes in Abhängigkeit von der Temperatur T_{A} der Abgasreinigungseinrichtung (4) und der Änderungsgeschwindigkeit dT_{A}/dt der Temperatur der Abgasreinigungseinrichtung (4) eingestellt wird.

2. Verfahren nach Anspruch 1,
**dadurch gekennzeichnet, dass**
der Einspritzzeitpunkt t_{E} der Nacheinspritzung in Abhängigkeit von der Temperatur T_{A} der Abgasreinigungseinrichtung (4) und/oder in Abhängigkeit von der Drehzahl N der Brennkraftmaschine (1) eingestellt wird.

3. Verfahren nach Anspruch 1 oder 2,
**dadurch gekennzeichnet, dass**
die Nacheinspritzung in jedem n-ten Expansionstakt vorgenommen wird, wobei n eine ganze Zahl größer oder gleich eins ist.

4. Verfahren nach Anspruch 3,
**dadurch gekennzeichnet, dass**
die Zahl n in Abhängigkeit von der Temperatur T_{A} der Abgasreinigungseinrichtung (4) und der Änderungsgeschwindigkeit dT_{A}/dt der Temperatur der Abgasreinigungseinrichtung (4) gewählt wird.

5. Verfahren nach einem der vorhergehenden Ansprüche,
**dadurch gekennzeichnet, dass**
der Einspritzdruck p_{E} des nacheingespritzten Kraftstoffes in Abhängigkeit vom Einspritzzeitpunkt t_{E} der Nacheinspritzung (4) eingestellt wird.

6. Verfahren nach einem der vorhergehenden Ansprüche,
**dadurch gekennzeichnet, dass**
die Öffnungszeit tᵥ eines Auslassventils der Brennkraftmaschine (1) in Abhängigkeit von der Temperatur T_{A} der Abgasreinigungseinrichtung und der Änderungsgeschwindigkeit dT_{A}/dt der Temperatur der Abgasreinigungseinrichtung (4) eingestellt wird.

7. Abgasreinigungsanlage nach Anspruch 6,
**dadurch gekennzeichnet, dass**
die Öffnungszeit tᵥ des Auslassventils in Abhängigkeit von der Drehzahl N der Brennkraftmaschine (1) eingestellt wird.

8. Verfahren nach einem der vorhergehenden Ansprüche,
**dadurch gekennzeichnet, dass**
der Grenzwert T_{G} in Abhängigkeit vom Betriebszustand der Brennkraftmaschine (1) und/oder von der Abgaszusammensetzung und/oder vom Alterungszustand der Abgasreinigungseinrichtung (4) eingestellt wird.
